# EUROPÄISCHE PATENTSCHRIFT

(11) **EP 1 780 011 B1**
(45) Veröffentlichungstag und Bekanntmachung des Hinweises auf die Patenterteilung: **13.06.2012**
(21) Anmeldenummer: 06022301.3
(22) Anmeldetag: 25.10.2006
(51) Int. Cl.: B41F 9/00, F16C 13/02, F16C 33/10, F16C 33/66

(54) **Presseur**
Impression roller
Rouleau d'impression

(30) Priorität: 25.10.2005 DE 202005016974 U
(43) Veröffentlichungstag der Anmeldung: 02.05.2007
(73) Patentinhaber: Dettke, Christa, 22946 Trittau (DE); Dettke, Christoph, 22946 Trittau (DE); Dettke, Hubertus, 22946 Trittau (DE)
(72) Erfinder: Dettke, Christa, 22946 Trittau (DE); Dettke, Christoph, 22946 Trittau (DE); Dettke, Hubertus, 22946 Trittau (DE); Dalla Bona, Arnold, Pianazzo (CH)
(74) Vertreter: Hauck Patent- und Rechtsanwälte

(56) Entgegenhaltungen:
- EP-A- 0 556 463
- EP-A- 0 892 471
- EP-A- 0 962 675
- EP-A- 1 072 406
- EP-A- 1 223 359
- JP-A- 7 127 647
- US-A- 4 604 222
- US-A1- 2002 076 125
- US-B1- 6 755 572

## Beschreibung

Die Erfindung betrifft einen Presseur einer Rotationsdruckmaschine.

Beim Rotationsdruck wird das bahnförmige oder bogenförmige Druckmaterial (z.B. Papier, Karton oder Kunststoffolie) mit hoher Geschwindigkeit zwischen einer Druckwalze und einem Presseur hindurchgeführt. Besonders hohe Geschwindigkeiten werden beim Illustrationsdruck erreicht. Der Druckzylinder nimmt in Näpfchen in seiner Oberfläche Farbe aus einer Farbwanne auf. Der Überschuß wird in der Regel abgerakelt. Zur möglichst weitgehenden Übertragung der Farbe aus den Näpfchen des elektrisch an Masse liegenden Druckzylinders auf das Druckmaterial wird einem mehr oder weniger elektrisch leitfähigen Bereich eines zylindrischen Presseurs mit gummielastischer Außenschicht eine Hochspannung zugeführt. Bei dem elektrisch leitfähigen Bereich handelt es sich z.B. um eine Halbleiterschicht, die auf den Umfang eines massiven oder hohlen Zylinderkörpers aufgebracht ist. Hierdurch bildet sich zwischen dem elektrisch leitfähigen Bereich und dem Druckzylinder ein elektrisches Feld aus, das auf die Farbe in den Näpfchen eine Kraft ausübt, die den Übergang der Farbe auf das Druckmaterial intensiviert und die Druckqualität steigert.

Es ist bekannt, dem Presseur die elektrische Ladung über eine Nadelektrode (auch "Sprühelektrode" genannt) zuzuführen, die durch einen Luftspalt vom Presseur bcabstandet ist. Ferner ist es bekannt, dem Presseur die elektrische Spannung über seitlich angeordnete Elektroden, Bürstenschleifkontakte oder über die Lager zuzuführen. Aus der EP 0 556 463 B1 ist ein mit einer Achse versehener Presseur bekannt, der einen begrenzt leitfähigen Belag über einem Stahlmantel aufweist. Dem Belag werden die elektrischen Ladungen über die Achse, ein Kugellager zwischen Achse und Stahlmantel und den Stahlmantel zugeführt. Ferner ist aus dieser Druckschrift ein Presseur mit einer Welle und einem begrenzt leitfähigen Belag über einem Stahlmantel bekannt. Dem Belag werden die elektrischen Ladungen über ein an der Stirnseite der Welle angeordnetes Kugellager, die Welle und den Stahlmantel zugeführt.

Die Spannungszufuhr über Elektroden und Bürstenschleifkontakte ist wegen Verschmutzung und Abnutzung unzuverlässig. Die Spannungszufuhr über Kugellager ist verhältnismäßig unzuverlässig, weil die unvermeidliche Abnutzung der Lager die Ladungszufuhr beeinträchtigen kann. Außerdem kann die Zufuhr der Spannung über die Lager die Lagerabnutzung beschleunigen.

Die US-B1-6 755 572 beschreibt ein Wälzlager, das im Hinblick auf die Ableitung von Ladungen von der Welle eines Motors ausgestaltet ist. Hierfür ist ein Hohlraum zwischen äußerer und innerer Lagerschale eines die Welle lagernden Kugellagers mit einem elektrisch leitfähigen Fluid in Form eines Carbonschwarz enthaltenden Gleitmittels aufgefüllt. Ein Austreten des Gleitmittels wird durch Abdichtelemente verhindert.

Die EP-A-1 072 406 beschreibt eine elektrostatische Druckhilfe mit der Zufuhr einer elektrischen Spannung über ein elektrisches Wälz- oder Kugellager.

Die US-A-4 604 222 beschreibt Ferrofluidc, die eine verbesserte elektrische Leitfähigkeit haben. Derartige Ferrofluide sollen zur Abdichtung von Diskettenlaufwerken von Computern oder von Bedampfungsvorrichtungen in der Halbleiterindustrie eingesetzt werden.

Die EP-A-0 892 471 und die US 2002/076125 A1 beschreiben Kugellager, die elektrisch leitfähige Fluide enthalten.

Davon ausgehend liegt der Erfindung die Aufgabe zugrunde, die Spannungszufuhr zu einem Presseur zu verbessern.

Die Aufgabe wird durch einen Presseur mit den Merkmalen des Anspruches 1 gelöst. Vorteilhafte Ausgestaltungen des Presseurs sind in den Unteransprüchen angegeben.

Der erfindungsgemäße Presseur einer Rotationsdruckmaschine hat einen Zylinder, der zumindest in einem Bereich mehr oder weniger elektrisch leitfähig ist, Einrichtungen zum drehbaren Lagern des Zylinders um seine Zylinderachse und mindestens eine Einrichtung zum Zuführen einer elektrischen Spannung an den elektrisch leitfähigen Bereich, wobei die Einrichtung zum Zuführen einer elektrischen Spannung an einer Stirnseite des Zylinders oder einer damit verbundenen Welle einen mit dem Zylinder oder der Welle verbundenen und zur Zylinderachse konzentrischen Rotor, einen mit Abstand vom Rotor konzentrisch zur Zylinderachse angeordneten Stator, einen Hohlraum zwischen Stator und Rotor, eine dem Hohlraum zugewandte und elektrisch mit dem elektrisch leitfähigen Bereich verbundene Rotorelektrode des Rotors, eine dem Hohlraum zugewandte und elektrisch mit einer elektrischen Spannungsversorgung verbindbare Statorelektrode des Stators, ein elektrisch leitfähiges Fluid in dem Hohlraum und mindestens ein Mittel zum Verhindern eines Ausströmens des elektrisch leitfähigen Fluides aus dem Hohlraum und die Einrichtung zum Zuführen einer elektrischen Spannung eine zusätzliche Einrichtung zu den Einrichtungen zum drehbaren Lagern des Zylinders ist.

Dem erfindungsgemäßen Presseur wird die elektrische Spannung über ein elektrisch leitfähiges Fluid zugeführt. Dieses befindet sich in einer Einrichtung zum Zuführen einer elektrischen Spannung, die an einer Stirnseite des Zylinders angeordnet ist. Die Einrichtung zum Zuführen der elektrischen Spannung hat einen Rotor, der mit dem Zylinder verbunden ist und mit diesem mitdreht. Ferner hat sie einen Stator, der in einem Abstand vom Rotor angeordnet ist und feststeht. Der Rotor hat eine Rotorelektrode, die elektrisch mit dem elektrisch leitfähigen Bereich verbunden ist. Der Stator hat eine Statorelektrode, die elektrisch mit einer Spannungsversorgung verbindbar ist. In dem Hohlraum befindet sich das elektrisch leitfähige Fluid. Mindestens ein Mittel zum Verhindern des Ausströmens verhindert ein Ausströmen des elektrisch leitfähigen Fluides aus dem

Hohlraum. Durch Anlegen der Spannungsversorgung an die Statorelektrode ist es möglich, elektrische Ladung über das elektrisch leitfähige Fluid auf die Rotorelektrode und von dieser auf den elektrisch leitfähigen Bereich des Zylinders zu übertragen. Das elektrisch leitfähige Fluid kann so ausgewählt sein, daß die Übertragung der elektrischen Ladung annähernd verlustfrei ist. Die Übertragung über das elektrisch leitfähige Fluid ist praktisch abnutzungsfrei. Ferner werden die Einrichtungen zum drehbaren Lagern des Zylinders durch die Übertragung der Ladung auf den Zylinder nicht beeinträchtigt.

Gemäß einer Ausgestaltung ist das elektrisch leitfähige Fluid ein Öl oder Fett. Ein geeignetes elektrisch leitfähiges Wälzlagerschmierfett wird beispielsweise von der Firma Klüber Lubrication München KG, Geisenhauserstraße 7, 8379 München, Deutschland unter der Bezeichnung Klüberlektrik B42-72 angeboten. Grundsätzlich kann das Fluid ein elektrisch leitfähiges Gas sein.

Gemäß einer Ausgestaltung umfaßt das Mittel zum Verhindern des Ausströmens mindestens ein den Hohlraum seitlich begrenzendes Begrenzungselement zwischen Stator und Rotor. Das Begrenzungselement verhindert, daß das Fluid seitlich aus dem Hohlraum austritt. Das Begrenzungselement ist z.B. eine seitliche Begrenzungswand, die fest mit dem Stator verbunden ist und in einem kurzen Abstand von dem Rotor endet oder umgekehrt. Auch ist es möglich, daß der Rotor und der Stator mehrere, in kurzem Abstand voneinander angeordnete Begrenzungswände aufweisen, zwischen denen ein labyrinthartiger Spalt vorhanden ist, so daß der Austritt von elektrisch leitfähigem Fluid wirksam unterbunden wird.

Wenn ein hohlzylindrischer Rotor oder Stator einen (hohl-)zylindrischen Stator oder Rotor umgibt, ist der dazwischen ausgebildete Hohlraum vorteilhaft von radial vorspringenden, seitlichen Begrenzungswänden begrenzt, die mit dem außen angeordneten, hohlzylindrischen Rotor oder Stator verbunden sind. Das elektrisch leitfähige Fluid wird durch die Zentrifugalkräfte radial nach außen bewegt, so daß es seitlich von den Begrenzungswänden im Hohlraum festgehalten wird. Durch Spalte zwischen den Begrenzungswänden und dem zentral angeordneten Stator oder Rotor tritt kein elektrisch leitfähiges Fluid aus. Die Übertragung der elektrischen Ladung vom zentral angeordneten Stator oder Rotor auf das radial nach außen bewegte, elektrisch leitfähige Fluid kann sichergestellt werden durch einen vom Stator oder Rotor getragenen, elektrisch leitfähigen Ring, der radial in den Hohlraum hineinragt und dessen Umfang einen Abstand von dem außen angeordneten Rotor oder Stator aufweist. Dieser elektrisch leitfähige Kreisring taucht stets in das elektrisch leitfähige Fluid ein.

Gemäß einer weiteren Ausgestaltung umfaßt das Mittel zum Verhindern mindestens ein den Hohlraum seitlich begrenzendes Dichtelement zwischen Stator und Rotor. Das Dichtelement verhindert ein seitliches Austreten von elektrisch leitfähigem Fluid, auch wenn dieses niedrigviskos ist bzw. der Hohlraum vollständig mit elektrisch leitfähigem Fluid gefüllt ist. Außerdem kann die Abtrennung des Hohlraumes von der Umgebung aus Gründen des Explosionsschutzes gewünscht sein.

Gemäß einer weiteren Ausgestaltung umfaßt das Mittel zum Verhindern eines Ausströmens ein elektrisch leitfähiges Fluid, das ein hochviskoses Öl oder Fett ist. Das hochviskose Öl oder Fett verbleibt aufgrund seiner nicht vorhandenen oder stark eingeschränkten Fließfähigkeit an dem Ort im Hohlraum, an dem es appliziert worden ist. Grundsätzlich ist es deshalb bei Anwendung eines hinreichend hochviskosen Öls oder Fettes nicht erforderlich, weitere Mittel zum Verhindern eines Ausströmens des elektrisch leitfähigen Fluides einzusetzen. Das hochviskose Öl oder Fett kann aber auch in Kombination mit mindestens einem Begrenzungselement oder mindestens einem Dichtelement zum Einsatz kommen. Wenn die Stirnseite der Welle des Presseurs frei von weiteren Bauteilen ist (z.B. einer Drehdurchführung zum Einspeisen von Luft bzw. Hydrauliköl in den Presseur), kann die Einrichtung zum Zuführen der elektrischen Spannung an der Stirnseite der Welle montiert sein, ohne mit weiteren Bauteilen zu kollidieren. Dabei kann z.B. der Rotor hohlzylindrisch und der Stator vollzylindrisch (oder umgekehrt) oder der Rotor kreisscheibenförmig und der Stator ebenfalls kreisscheibenförmig ausgeführt sein.

Die Einrichtung zum Zuführen der elektrischen Spannung ist so ausführbar, daß sie mit den Einrichtungen zum drehbaren Lagern des Zylinders oder einer Drehdurchführung zum Einspeisen von Luft bzw. Hydrauzliköl in den Presseur nicht kollidiert. Hierfür ist die Einrichtung zum Zuführen der elektrischen Spannung z.B. insgesamt hohlzylindrisch ausgeführt und nimmt die Einrichtungen zum drehbaren Lagern des Zylinders (z.B. eine Achse, Welle oder Drehlager) oder eine Drehdurchführung zumindest teilweise auf. In einem anderen Fall ist die Einrichtung zum Zuführen einer elektrischen Spannung in dem Hohlraum einer hohlzylindrischen Einrichtung zum drehbaren Lagern des Zylinders (z.B. eine Hohlwelle oder eine Hohlachse) angeordnet.

Gemäß einer Ausgestaltung ist/sind der Rotor (hohl-)zylindrisch und/oder der Stator (hohl-)zylindrisch. In dem hohlzylindrischen Bauteil ist das andere Bauteil konzentrisch angeordnet. Dieses ist hierfür vollzylindrisch oder hohlzylindrisch. Sowohl die Anordnung des Rotors außen und des Stators innen als auch des Stators außen und des Rotors innen ist möglich. Wenn das innen angeordnete Bauteil ebenfalls hohlzylindrisch ist, ist die Einrichtung zum Zuführen der elektrischen Spannung insgesamt hohlzylindrisch. Dann kann sie die Einrichtungen zum drehbaren Lagern oder eine Drehdurchführung zumindest teilweise in ihrem Hohlraum aufnehmen oder in dem Hohlraum einer hohlzylindrischen Einrichtung zum drehbaren Lagern angeordnet sein. Letzteres ist auch bei einer Einrichtung zum Zuführen einer elektrischen Spannung mit einem vollzylindrischen Rotor oder Stator möglich.

Gemäß einer weiter oben bereits angesprochenen Ausgestaltung trägt ein (hohl )zylindrischer Rotor mindestens einen radial in den Hohlraum hineinragenden, elektrisch leitfähigen Kreisring, dessen Umfang einen Abstand von dem Stator aufweist. Der Kreisring kann einen elektrischen Kontakt des Rotors mit dem elektrischen leitfähigen Fluid auch dann gewährleisten, wenn der Hohlraum nicht vollständig mit Fluid befüllt bzw. sich das Fluid zum Stator hin begibt, beispielsweise, weil der Stator den Rotor umgibt und die Zentrifugalkräfte das elektrisch leitfähige Fluid zum Stator hin bewegen. Die Einrichtung zum Zuführen einer elektrischen Spannung ist solange wirksam, wie der Abstandsbereich zwischen Umfang des Kreisringes und Stator mit elektrisch leitfähigem Fluid gefüllt ist, so daß die Einrichtung zum Zuführen der elektrischen Spannung sehr sicher arbeitet. Aus denselben Gründen trägt gemäß einer weiteren Ausgestaltung, die auch mit der vorgenannten Ausgestaltung kombinierbar ist, der Stator mindestens einen radial in den Hohlraum hineinragenden, elektrisch leitfähigen Kreisring, dessen Umfang einen Abstand vom Rotor aufweist. Gemäß einer weiteren Ausgestaltung ist der Kreisring eine Kreisringscheibe. Gemäß einer weiteren Ausgestaltung, die einem Funkenabriß in dem unwahrscheinlichen Fall, daß zwischen Kreisring und benachbartem Stator bzw. Rotor kein elektrisch leitfähiges Fluid vorhanden ist, unterbindet, ist zwischen dem Umfang des Kreisringes und dem Stator oder Rotor ein schmaler Spalt vorhanden.

Einbezogen sind auch Lösungen, bei denen der Rotor und/oder der Stator kreisringscheibenförmig und/oder kreisscheibenförmig ist/sind. Bei kreisringscheibenförmiger Ausführung sind die Einrichtungen zum drehbaren Lagern des Zylinders oder eine Drehdurchführung durch die zentrale Öffnung hindurchführbar. Eine kreisscheibenförmige Ausführung kann in einem Hohlraum einer Einrichtung zum drehbaren Lagern des Zylinders angeordnet sein.

Gemäß einer Ausgestaltung ist das Dichtelement ein radial wirkender Dichtring. Dieser ist z.B. zwischen einer konzentrischen Anordnung aus einem (hohl)zylindrischen Rotor und einem (hohl-)zylindrischen Stator angeordnet. Gemäß einer anderen Ausgestaltung ist das Dichtelement ein axial wirkender Dichtring. Dieser ist z.B. zwischen einem kreisringscheiben- bzw. kreisscheibenförmigen Rotor und Stator einsetzbar. Gemäß einer weiteren Ausgestaltung ist das Dichtelement ein Simmerring.

Es ist möglich, die Einrichtung zum Zuführen der elektrischen Spannung mit nur einem einzigen Dichtelement auszuführen, z.B. wenn die Einrichtung zum Zuführen einer elektrischen Spannung außen einen hohlzylindrischen Rotor mit einem Boden und einen in den Rotor eintauchenden Stator in Form eines Vollzylinders aufweist. Ferner kommt eine kreisscheibenförmige Einrichtung zum Zuführen einer elektrischen Spannung mit nur einem ringförmigen, axial wirkenden Dichtelement am Umfang aus. Gemäß einer Ausgestaltung weist die Einrichtung zum Zuführen einer elektrischen Spannung zwei voneinander beabstandete Dichtelemente auf. Dies ist z.B. der Fall, wenn die Einrichtung zum Zuführen einer elektrischen Spannung einen hohlzylindrischen Rotor ohne Boden aufweist, in den ein vollzylindrischer oder hohlzylindrischer Stator eintaucht. Dies ist ferner der Fall, wenn die Einrichtung zum Zuführen einer elektrischen Spannung zwei kreisringscheibenförmige Bauteile aufweist.

Gemäß einer Ausgestaltung ist zwischen Rotor und Stator mindestens ein den Rotor bezüglich des Stators drehbar lagerndes Drehlager vorhanden. Durch das Drehlager werden Rotor und Stator auf Abstand voneinander gehalten. Vorzugsweise wird zusätzlich der Stator bezüglich eines Maschinenrahmens, in dem der Presseur drehbar gelagert ist, drehfest gehalten, damit er nicht mit dem Rotor mitrotiert.

Gemäß einer Ausgestaltung ist das Lager in dem Hohlraum angeordnet. Das Lager ist hierdurch geschützt untergebracht. Es kann vorteilhaft von dem elektrisch leitfähigen Fluid geschmiert werden. Gemäß einer Ausgestaltung ist zwischen dem Drehlager und dem Rotor und/oder dem Stator eine Isolatorschicht vorhanden. Die Isolatorschicht verhindert einen die Abnutzung beschleunigenden Stromfluß durch das Drehlager.

Gemäß einer anderen Ausgestaltung ist das Drehlager außerhalb des Hohlraumes angeordnet.

Die Einrichtung zum Zuführen einer elektrischen Spannung kann unterschiedlich ausgestaltet sein. Gemäß einer Ausgestaltung ist die Einrichtung zum Zuführen einer elektrischen Spannung mindestens eine Einrichtung zum drehbaren Lagern des Zylinders, welche das elektrisch leitfähige Fluid als Schmiermittel enthält. Die Einrichtung zum drehbaren Lagern ist beispielsweise ein Gleitlager. Gemäß einer weiteren Ausgestaltung ist die Einrichtung zum drehbaren Lagern ein Wälzlager. Da die Spannungszufuhr über das elektrisch leitfähige Fluid erfolgt, ist sie von Abnutzungen des Wälzlagers weitgehend unabhängig. Außerdem wird eine beschleunigte Lagerabnutzung durch die Spannungsübertragung vermieden. Dies ist bereits bei Wälzkörpern (z.B. Kugeln eines Kugellagers) aus einem elektrisch leitfähigen Material der Fall. Gemäß einer bevorzugten Ausgestaltung sind die Wälzkörper aus einem elektrisch isolierenden Material, so daß eine Übertragung der Spannung über die Wälzkörper völlig ausgeschlossen ist.

Gemäß einer weiteren Ausgestaltung hat der Presseur einer Rotationsdruckmaschine mindestens eine Drehdurchführung für Luft und/oder Hydrauliköl, die einen Durchgangskanal für Luft und/oder Hydrauliköl hat, der einen drehbaren Teil und einen feststehenden Teil aufweist, die gegeneinander durch ein elektrisch leitfähiges Dichtsystem abgedichtet sind, dessen drehbarer Teil mit dem elektrisch leitfähigen Bereich verbunden ist und dessen feststehender Teil mit einer elektrischen Spannungsversorgung verbindbar ist. Bei dieser Ausgestaltung ist die Drehdurchführung für Luft und/oder Hydrauliköl die Einrichtung zum Zuführen einer elektrischen Spannung.

Bei dieser Ausgestaltung wird eine Drehdurchführung, die für die Zufuhr von (Preß-)Luft und/oder Hydrauliköl zum Presseur bestimmt ist (z.B. bei einem Sleeve-System), zugleich für die Zufuhr der elektrischen Spannung zum Presseur genutzt. Hierfür hat die Drehdurchführung einen Durchgangskanal mit einem feststehenden Teil und einem drehbaren Teil, die gegeneinander durch ein elektrisch leitfähiges Dichtsystem abgedichtet sind. Über das elektrisch leitfähige Dichtsystem wird die elektrischen Spannung vom feststehenden Teil auf den drehbaren Teil des Durchgangskanals übertragen. Vom drehbaren Teil des Durchgangskanals gelangen die elektrischen Ladungen zum elektrisch leitfähigen Bereich des Zylinders. Diese Spannungszuführung des Presseurs ist sehr zuverlässig.

Gemäß einer Ausgestaltung ist das Dichtungssystem ein axial wirkendes Dichtungssystem.

Gemäß einer weiteren Ausgestaltung hat ein feststehender Teil des Dichtungssystems einen federvorgespannten Gleitring und ein drehbarer Teil des Dichtungssystems einen damit zusammenwirkenden Gegen-Gleitring oder umgekehrt. Der feststehende Teil des Dichtungssystems ist Bestandteil des feststehenden Teils des Durchgangskanals oder bildet diesen. Der drehbare Teil des Dichtungssystems ist Bestandteil des drehbaren Teils des Durchgangskanals oder bildet diesen.

Gemäß einer weiteren Ausgestaltung ist der drehbare Teil des Durchgangskanals in mindestens einem Radiallager gelagert.

Gemäß einer weiteren Ausgestaltung ist zwischen Radiallager und einem Gehäuse und/oder dem drehbaren Teil des Durchgangskanals eine Isolatorschicht vorhanden. Die Isolatorschicht verhindert, daß elektrische Ladung über das Radiallager fließt und seine Abnutzung erhöht.

Gemäß einer weiteren Ausgestaltung sind der feststehende und der drehbare Teil des Durchgangskanals zylindrisch, wobei der drehbare Teil des Durchgangskanals in einem zylindrischen Hohlraum und der feststehende Teil des Durchgangskanals in einer Zylinderbohrung des Gehäuses angeordnet sind.

Die Drehdurchführung kann ein speziell für die Durchführung von (Preß-)Luft und/oder Hydrauliköl und elektrischer Spannung entworfenes Bauteil sein. Es ist aber auch möglich, handelsübliche Drehdurchführungen einzusetzen. Geeignete Drehdurchführungen werden z.B. von der Däublin GmbH, Nassaustraße 10, 65719 Hofheim-Wallau, Deutschland angeboten. Beispielsweise sind die Drehdurchführungen Modell 1005, 1102, 1115, 1205, 2200, 250-094, 355-021 und 452-000 für den erfindungsgemäßen Einsatz geeignet.

Gemäß einer weiteren Ausgestaltung ist die Einrichtung zum Zuführen einer elektrischen Spannung ein besonderes Bauteil oder eine besondere Baugruppe, das oder die keine Einrichtung zum drehbaren Lagern des Zylinders und auch keine Drehdurchführung für Luft und/oder Hydrauliköl ist. Die Einrichtung zum Zuführen einer elektrischen Spannung wird also zusätzlich zu den Einrichtungen zum drehbaren Lagern des Zylinders und gegebenenfalls zusätzlich zu einer Drehdurchführung für Luft und/oder Hydrauliköl eingesetzt.

Gemäß einer Ausgestaltung umfaßt die Einrichtung zum Zuführen einer elektrischen Spannung einen Rotor, der eine an einer Stirnseite des Zylinders angeordnete, elektrisch leitfähige Buchse aufweist, die elektrisch mit dem elektrisch leitfähigen Bereich des Zylinders verbunden ist, und einen Stator, der einen die Buchse umgebenden, elektrisch leitfähigen Hohlzylinder aufweist, der mit der Spannungsversorgung verbindbar ist. Die Buchse kann - gegebenenfalls unter Zwischenlage einer isolierenden Buchse - z.B. an der Stirnseite des Zylinders auf einer Welle angebracht werden. Der Stator ist gegebenenfalls nachträglich auf die Buchse aufschiebbar. Gemäß einer weiteren Ausgestaltung ist zwischen Stator und Rotor ein Lager vorhanden. Die Baugruppe kann komplett montiert werden oder nacheinander, d.h. der Rotor zuerst und danach der Stator.

Gemäß einer weiteren Ausgestaltung weist der Rotor an der dem Zylinder zugewandten Stirnseite der Buchse einen radial vorspringenden, elektrisch leitfähigen Flansch auf, der mit dem elektrisch leitfähigen Bereich des Zylinders verbunden ist. Vorteilhaft kann der Flansch an der Stirnseite des Zylinders befestigt werden.

Gemäß einer weiteren Ausgestaltung umfaßt die Einrichtung zum Zuführen einer elektrischen Spannung einen Rotor, der eine an einer Stirnseite des Zylinders angeordnete, auf der Seite des Zylinders geschlossene, elektrisch leitfähige, hohle Buchse aufweist, und einen Stator, der eine in die Buchse hineinragende, elektrisch leitfähige Achse aufweist. Dieser Ausgestaltung kommt mit nur einem Begrenzungselement oder Dichtelement in der Nähe der Öffnung der Buchse aus, durch die die Achse in die Buchse eingeschoben ist. Gemäß einer vorteilhaften Ausgestaltung ist der Rotor mittels eines von dem geschlossenen Ende der Buchse vorspringenden Gewindebolzens in eine entsprechende Gewindebohrung in der Stirnseite des Presseurs bzw. einer Welle des Presseurs eingeschraubt. Gemäß einer weiteren Ausgestaltung ist zwischen Rotor und Stator mindestens ein Lager vorhanden. Vorzugsweise ist zwischen dem Lager und dem Stator und/oder dem Rotor eine Isolierung vorhanden.

Schließlich umfaßt gemäß einer Ausgestaltung die Einrichtung zum Zuführen einer elektrischen Spannung einen Rotor, der eine elektrisch leitfähige Adapterbuchse aufweist, die einen zentralen Durchgangskanal hat, der in den beiden Enden der Adapterbuchse mündet, die an einem Ende ein Außengewinde hat, das in eine Gewindebohrung in einer Stirnseite des Zylinders oder in einer Welle des Presseurs eingeschraubt ist, in der ein Kanal für Luft und/oder Hydrauliköl mündet, weist die Adapterbuchse am anderen Ende eine Gewindebohrung auf, in die ein Gewindebolzen einer Drehdurchführung für Luft und/oder Hydrauliköl einschraubbar ist und weist der Stator einen die Adapterbuchse umgebenden, elektrisch leitfähigen Hohlzylinder auf, der mit einer elektrischen Spannungsversorgung verbindbar ist. Diese Einrichtung zum Zuführen einer elektrischen Spannung ist in der Gewindebohrung eines Presseurs fixierbar, die an sich für die Befestigung einer Drehdurchführung für Luft und/oder Hydrauliköl bestimmt ist. Die Drehdurchführung für Luft und/oder Hydrauliköl wird über die Gewindebohrung und den Durchgangskanal der Adapterbuchse an den Kanal des Zylinders angeschlossen.

Bei den verschiedenen Erfindungsvarianten und Ausgestaltungen kann der Zylinder des Presseurs auf verschiedene Weise ausgeführt sein. Er ist z.B. ein Vollzylinder oder ein Hohlzylinder aus Metall, Kunststoff oder einem anderen Material. Der elektrisch leitfähige Bereich ist beispielsweise eine Halbleiterschicht. Der elektrisch leitfähige Bereich ist z.B. direkt auf einem elektrischen Kern oder unter Zwischenlage an der Isolatorschicht auf dem elektrischen Kern angeordnet. Ferner umfaßt der Zylinder eine gummielastische Außenschicht, die auf dem harten zylindrischen Kern angeordnet ist. Die elektrisch leitfähige Schicht ist z.B. in die gummielastische Außenschicht integriert. Auch ist es möglich, zwischen Halbleiterschicht und einem nicht leitenden zylindrischen Kern eine Hochleiterschicht vorzusehen. Es sind insbesondere sämtliche Ausgestaltungen des Presseurs einbezogen, die in dem Gebrauchsmuster DE 203 19 870 U1 beschrieben sind.

Die Erfindung wird nachfolgend anhand der anliegenden Zeichnung von Ausführungsbeispielen näher erläutert.

In den Zeichnungen zeigen:
- Fig. 1: eine Einrichtung zum Zuführen einer elektrischen Spannung mit einem elektrisch leitfähigen Fluid mit außen angeordnetem Rotor an einer Stirnseite eines Zylinders im Längsschnitt;
- Fig. 2: eine weitere Einrichtung zum Zuführen einer elektrischen Spannung mit einem elektrisch leitfähigen Fluid und innen angeordnetem Rotor an der Stirnseite eines Zylinders im Längsschnitt;
- Fig. 3: eine weitere Einrichtung zum Zuführen einer elektrischen Spannung mit einem elektrisch leitfähigen Fluid und außen angeordnetem Rotor mit Befestigung an einer Gewindebohrung einer Welle des Zylinders im Längsschnitt;
- Fig. 4: eine weitere Einrichtung zum Zuführen einer elektrischen Spannung mit einer Adapterbuchse zum Anschließen einer Drehdurchführung im Längsschnitt.

Bei der nachfolgenden Erläuterung verschiedener Ausführungsbeispiele sind für übereinstimmende bzw. im wesentlichen übereinstimmende Bauelemente dieselben Bezugsziffern verwendet, wobei Unterschiede durch einen nachfolgenden Punkt und eine Ziffer gekennzeichnet sind.

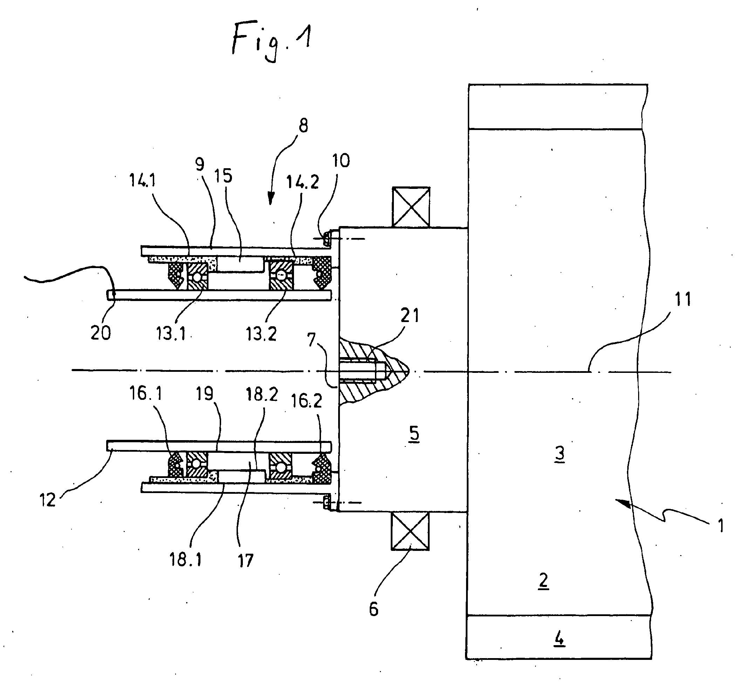

Gemäß Fig. 1 hat ein nur teilweise gezeigter Presseur 1 hat einen Zylinder 2, der einen metallischen Zylinderkern 3 und eine gummielastische, elektrisch halbleitende, gummielastische Schicht 4 am Außenumfang aufweist. Ferner hat der Presseur 1 eine Welle 5 aus Stahl, die beidseitig in Radialkugellagern 6 gelagert ist.

An einer Stirnseite 7 der Welle 5 befindet sich eine Einrichtung 8 zum Zuführen einer elektrischen Spannung. Diese weist eine hohlzylindrischen Rotor 9 auf, der mittels Schrauben 10 an der Stirnseite 7 der Welle 5 fixiert ist. Der Rotor 9 ist konzentrisch zur Zylinderachse 11 des Presseurs 1 angeordnet.

Ferner umfaßt die Einrichtung 8 einen hohlzylindrischen Stator 12, der ebenfalls konzentrisch zur Welle angeordnet ist. Der Außendurchmesser des Stators 12 ist geringer als der Innendurchmesser des Rotors 9, so daß zwischen Rotor 9 und Stator 12 ein Abstandsbereich vorhanden ist.

Der Stator 12 ist über Radialkugellager 13.1, 13.2 am Innenumfang des Rotors 9 gelagert. Die Radialkugellager 13.1, 13.2 stützen sich über Isolatoren 14.1, 14.2 am Innenumfang des Rotors 9 ab. Zwischen den Radialkugellagern 13.1, 13.2 sitzt am Innenumfang des Rotors 9 ein Stützring 15 aus Metall. Die Isolatoren 14.1, 14.2 liegen an den Stirnseiten des Stützringes 15 an, so daß die Radialkugellager 13.1, 13.2 keinen Kontakt zu dem Stützring 15 haben.

Ferner sind außerhalb der Radialkugellager 13.1, 13.2 Simmerringe 16.1, 16.2 zwischen Rotor 9 und Stator 12 angeordnet. Diese dichten einen zwischen Rotor 9 und Stator 12 vorhandenen Hohlraum 17 seitlich ab.

Der Stator 12 ist am Außenumfang poliert, so daß die Simmerringe 16.1, 16.2 auf einer polierten Oberfläche aufsitzen.

In den Hohlraum 17 ist ein elektrisch leitfähiges Wälzlagerfett (oder ein anderes elektrisch leitfähiges Fluid) gefüllt.

Der Stator ist über eine nicht gezeigte Drehsicherung bezüglich eines Maschinenrahmens drehgesichert, in dem die Radiallager 6 gehalten sind.

Der Rotor 9 und der Stator 12 bestehen jeweils aus einem Metall, so daß ihre dem Hohlraum 17 zugewandten Seiten eine Rotorelektrode 18.1 und eine Statorelektrode 19 bilden. Am Innenumfang des Stützringes 15, der auf der Rotorelektrode 18.1 sitzt, befindet sich der mit der elektrisch leitfähigen Flüssigkeit in Kontakt stehende Bereich 18.2 der Rotorelektrode 18.1.

Der Stator 12 ist über einen Kabelanschluß 20 mit einer elektrischen Spannungsversorgung verbindbar. Der Rotor 9 ist über die metallische Welle 5 sowie den metallischen Zylinder 2 mit der Halbleiterschicht 4 elektrisch verbunden.

Wenn in den Kabelanschluß 20 eine elektrische Spannung eingeleitet wird, gelangt diese durch den Stator 12, die elektrisch leitfähige Flüssigkeit und durch den Rotor 9 in die Welle und durch den Zylinderkern 3 in die Halbleiterschicht 4. Somit wird die elektrische Spannung von außen auf die Halbleiterschicht 4 übertragen.

In der Stirnseite 7 der Welle 5 ist eine zentrale Gewindebohrung 21 vorhanden, in die eine nicht gezeigte Drehdurchführung für Luft und/oder Hydrauliköl einschraubbar ist. Bei geeigneter Ausführung ist die Drehdurchführung anstatt der Einrichtung 8 auch für die Einspeisung der elektrischen Spannung in den Presseur 1 nutzbar.

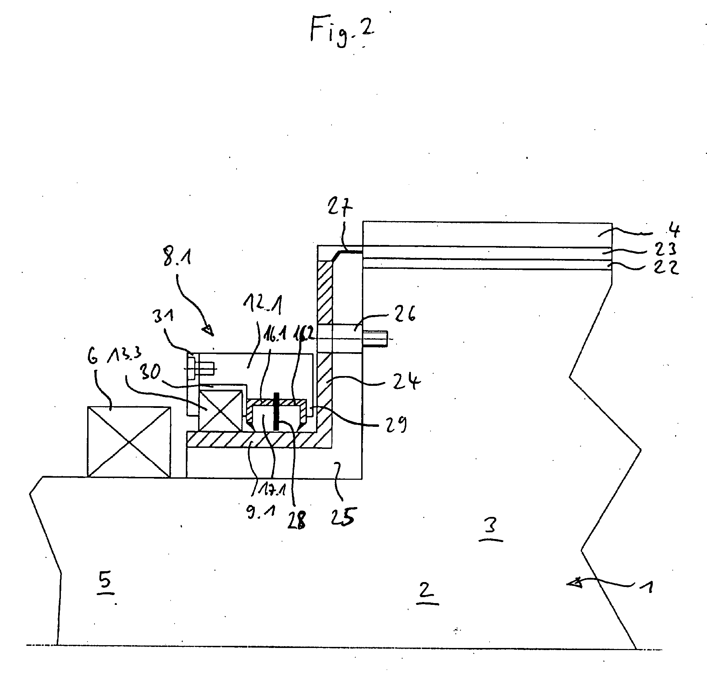

Gemäß Fig. 2 hat ein Presseur 1 einen Zylinder 2 mit einem metallischen Zylinderkern 3. Am Außenumfang des Zylinderkerns 3 ist eine Schicht aus einem Isolator 22 angeordnet. Diese trägt am Außenumfang eine Schicht aus einem Hochleiter 23. Am Außenumfang der Schicht 23 ist wiederum eine elektrisch halbleitende Schicht 4 vorhanden.

Die Schichten 22, 23, 4 sind vorzugsweise (gummi-)elastisch. Die Schichten 22, 23, 4 bestehen z.B. aus Gummi oder Polyurethan. Die isolierende Eigenschaft bzw. die unterschiedlichen Leitfähigkeiten der Schichten werden dadurch erreicht, daß dem Material keine elektrisch leitfähigen Partikel bzw. verschiedene Anteile elektrisch leitfähiger Partikel zugegeben werden. Die elektrisch leitfähigen Partikel sind z.B. Graphit.

Der Presseur 1 hat ferner eine Welle 5 aus Stahl, die beidseitig in Radialkugellagern 6 gelagert ist.

Zwischen einer Stirnseite des Presseurs und einem Radialkugellager ist eine Einrichtung zum Zuführen einer elektrischen Spannung 8.1 angeordnet.

Die Einrichtung zum Zuführen 8.1 hat einen Rotor 9.1 in Form einer Buchse bzw. eines Hohlzylinders mit einem radial nach außen vorspringenden, kreisringscheibenförmigen Flansch 24. Zwischen Rotor 9.1 und Welle 5 bzw. Stirnseite des Zylinders 2 sitzt ein Isolator 25. Der Rotor 9.1 ist mittels mehrerer Schrauben 26 am Zylinder fixiert, die durch Löcher des Flansches 24 und des Isolators 26 hindurchgeführt sind und in Gewindebohrungen in der Stirnseite des Zylinders 2 eingeschraubt sind.

Der Rotor 9.1 einschließlich des Flansches 24 besteht aus einem elektrisch leitfähigen Material, insbesondere Metall. Der Flansch 24 ist am Außenumfang über mindestens einen elektrischen Kontakt 27 (z.B. eine Drahtbrücke) mit der hochleitenden Schicht 23 verbunden.

Über den buchsenförmigen Teil des Rotors 9.1 ist ein hohlzylindrischer Stator 12.1 geschoben. Der Stator 12.1 trägt am Innenumfang zwei abdichtend auf dem Rotor 9.1 sitzende Dichtringe, die vorzugsweise als Simmerringe 16.1, 16.2 ausgeführt sind. Zwischen den Simmerringen 16.1, 16.2 ist eine Kreisringscheibe 28 aus Metall oder einem anderen elektrisch leitfähigen Material angeordnet. Diese hat am Außenumfang Kontakt mit dem ebenfalls elektrisch leitfähigen, z.B. metallischen Stator 12.1. Ihr Innenumfang ist durch einen Spalt vom Außenumfang des buchsenförmigen Teils des Rotors 9.1 beabstandet.

Die Anordnung aus Simmerringen 16.1, 16.2 und Kreisringscheibe 28 ist auf der einen Seite durch mindestens einen vorspringenden Rand 29 im Stator 12.1 gehalten. Auf der anderen Seite liegt an dieser Anordnung über eine weitere isolierende Schicht 30 ein Drehlager 13.3 an. Das Drehlager 13.3 ist somit außen isolierend im Stator 12.1 gehalten. An seinem Innenumfang liegt es am Rotor 9.1 an.

Das Drehlager 13.3 ist auf der anderen Seite durch eine Abschlußplatte 31 gesichert, die mit der Stirnseite des Stators 12.1 verschraubt ist. In einem Hohlraum 17.1 zwischen den Simmerringen 16.1, 16.2 und dem Rotor 9.1 befindet sich ein elektrisch leitfähiges Öl oder Fett oder ein anderes elektrisch leitfähiges Fluid.

An den Stator 12.1 wird eine elektrische Spannungsversorgung angeschlossen. Die Spannung wird durch den Stator 12.1, die Kreisringscheibe 28, das elektrisch leitfähige Fluid, den Rotor 9.1 und die Kontakte 27 auf die elektrisch hochleitende Schicht 23 übertragen. Durch die hochleitende Schicht 23 wird die Spannung gleichmäßig über die Innenseite des Halbleiters 4 verteilt. Von dort gelangt sie in den Druckspalt zwischen Presseur 1 und Druckzylinder.

Ein Abfließen der Ladung nach Masse wird durch die Isolierung des Rotors 9.1 gegenüber dem Presseur 1 und der hochleitenden Schicht 23 gegenüber dem Zylinder 3 sichergestellt.

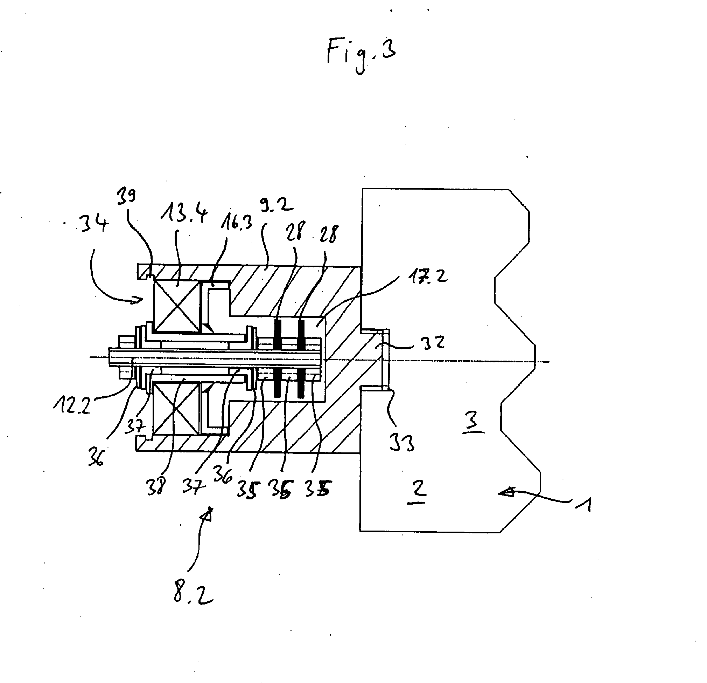

Gemäß Fig. 3 hat ein hohlzylindrischer Rotor 9.2 einen Gewindebolzen 32 an einem geschlossenen Ende. Der Gewindebolzen 32 ist in eine Gewindebohrung 33 eines Presseurs 1 eingeschraubt. Der Presseur 1 besteht aus Metall und hat an seinem Umfang eine nicht gezeigt halbleitende Schicht.

Durch eine stirnseitige Öffnung 34 des Rotors 9.2 ist ein Stator 12.2 in Form einer Achse in den Rotor 9.2 eingeführt. Der Stator 12.2 ist z.B. als Gewindestange ausgeführt.

Stator 12.2 und Rotor 9.2 bestehen jeweils aus einem elektrisch leitfähigen Material, z.B. aus Metall.

Auf dem inneren Ende des Stators 12.2 sind zwischen drei Muttern 35 Kreisringscheiben 28 aus einem elektrisch leitfähigen Material fixiert. Die Kreisringscheiben 28 bestehen z.B. aus Metall. Am Innenumfang kontaktieren sie den Stator 12.2. Ihr Außenumfang ist durch einen geringen Spalt vom Innenumfang des Rotors 9.2 beabstandet.

Der Stator 12.2 trägt zwischen zwei Scheiben 36 zwei Isoliernippel 37 aus einem isolierenden Material, auf denen eine Hülse 38 sitzt. Auf der Hülse 38 sitzt ein Drehlager 13.4, das am Außenumfang im Stator 9.2 gehalten ist. Zwischen dem Drehlager 13.4 und einer Stufe im Rotor 9.2 ist ein Simmerring 16.3 angeordnet, der am Innenumfang auf der Buchse 38 abdichtet. Auf der anderen Seite ist das Drehlager 13.4 durch einen nicht gezeigten Klemmring im Rotor 9.2 gehalten, der in eine im Rotor 9.2 umlaufende Nut 39 einschnappbar ist.

Ein Hohlraum 17. 2 zwischen Rotor 9.2 und Stator 12.2 wird mit einem elektrisch leitfähigen Öl oder Fett oder einem anderen elektrisch leitfähigen Fluid gefüllt. Eine an den Stator 12.2 angelegte elektrische Spannung wird über die Kreisringscheiben 28, das elektrisch leitfähige Fluid, den Rotor 9.2 und den metallischen Zylinderkern 3 gleichmäßig auf die halbleitende Schicht am Außenumfang des Presseurs 1 verteilt und in den Druckspalt eingeleitet. Wenn sich das elektrisch leitende Fluid aufgrund der Zentrifugalkräfte am Innenumfang des Rotors 9.2 ansammelt, ist durch die Kreisringscheiben 28 dennoch eine Spannungsübertragung gewährleistet.

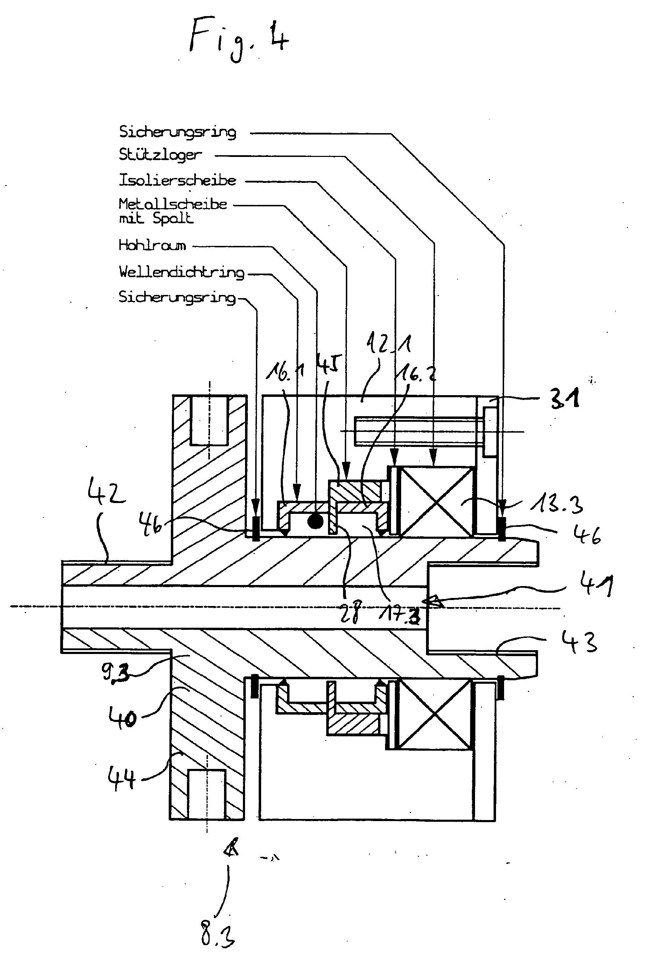

Gemäß Fig. 4 hat eine Einrichtung zum Zuführen einer elektrischen Spannung einen Rotor 9.3 in Form einer Adapterbuchse 40, die einen zentralen Durchgangskanal 41 aufweist, der in den beiden Stirnseiten der Adapterbuchse 40 mündet. An einer Stirnseite hat die Adapterbuchse 40 einen zentral vorstehenden Gewindebolzen 42. Auf der anderen Stirnseite hat sie eine Gewindebohrung 43 in einer Aufweitung des Durchgangsloches 41. Die Gewindebohrung 43 ist komplementär zu dem Außengewinde des Gewindebolzens 42. Der Gewindebolzen 42 ist in eine Gewindebohrung eines nicht gezeigten Presseurs einschraubbar, in der ein Kanal für die Einspeisung von Luft und/oder Hydrauliköl mündet. Dies ist beispielsweise bei Sleevesystemen der Fall.

Die Adapterbuchse 40 trägt eine radial vorspringende Scheibe 44, die weiteren Funktionen dienen kann, aber nicht unerläßlich ist.

Auf die Adapterbuchse 40 ist eine Anordnung aus einem Stator 12.1, Simmerringen 16.1, 16.2, Kreisringscheibe 28, Drehlager 13.3 und Abschlußplatte 31 aufgeschoben, die im wesentlichen der Anordnung der entsprechenden Teile gemäß Fig. 2 entspricht. Insoweit wird auf den diesbezüglichen Teil der Figurenbeschreibung verwiesen. In Abweichung von Fig. 2 ist gemäß Fig. 4 die Kreisringscheibe 28 außen mit einem kreiszylindrischen Abschnitt 45 versehen, der z.B. zur verbesserten Ausrichtung bzw. Kontaktierung der Kreisringscheibe 28 dient.

Die Anordnung aus Stator 12.1, Simmerringen 16.1, 16.2, Kreisringscheibe 28, Drehlager 13.3 und Abschlußplatte 31 ist axial zwischen Klemmringen 46 gehalten, die in Nuten auf dem Außenumfang der Adapterbuchse 40 sitzen.

Die Adapterbuchse 40 bildet einen Rotor 9.1. Zwischen dem Rotor 9.1, den Simmerringen 16.1, 16.2 und der Kreisringscheibe 28 ist ein Hohlraum 17.1 vorhanden, der mit einem elektrisch leitfähigen Öl oder Fett oder einem anderen elektrisch leitfähigen Fluid gefüllt ist. Die elektrische Spannung wird in den Stator 12.1 eingeleitet, über die Kreisringscheibe 28 in das Öl oder Fett eingeleitet, von diesem auf den Rotor 9.1 übertragen und in den Zylinderkern 3 eingeleitet. Eine Drehdurchführung für Luft und/oder Hydrauliköl ist in die Gewindebohrung 43 einschraubbar.

## Patentansprüche

1. Presseur einer Rotationsdruckmaschine mit einem Zylinder (2), der zumindest in einem Bereich (4) mehr oder weniger elektrisch leitfähig ist, mit Einrichtungen (6) zum drehbaren Lagern des Zylinders um seine Zylinderachse (11) und mit mindestens einer Einrichtung (8) zum Zuführen einer elektrischen Spannung an den elektrisch leitfähigen Bereich (4), wobei die Einrichtung zum Zuführen einer elektrischen Spannung an einer Stirnseite des Zylinders (2) oder einer damit verbundenen Welle (5) einen mit dem Zylinder (2) oder der Welle verbundenen und zur Zylinderachse (11) konzentrischen Rotor (9) aufweist, wobei die Einrichtung zum Zuführen einer elektrischen Spannung einen mit Abstand vom Rotor (9) konzentrisch zur Zylinderachse (11) angeordneten Stator (12) und einen Hohlraum (17) zwischen Stator (12) und Rotor (9) aufweist, wobei die Einrichtung zum Zuführten einer elektrischen Spannung eine dem Hohlraum (17) zugewandte und elektrisch mit dem elektrisch leitfähigen Bereich (4) verbundene Rotorelektrode des Rotors (9) aufweise, wobei die Einrichtung zum Zuführen einer elektrischen Spannung eine dem Hohlraum (17) zugewandte und elektrisch mit der elektrischen Spannungsversorgung verbindbare Statorelektrode (19) des Stators (12) aufweist, **dadurch gekennzeichnet, dass** die Einrichtung zum Zuführen einer elektrischen Spannung (8) ein elektrisch leitfähiges Fluid in dem Hohlraum (17) aufweist, wobei die Einrichtung zum Zuführen einer elektrischen Spannung mindestens ein Mittel zum Verhindern (16.1, 16.2) eines Ausströmens des elektrisch leitfähigen Fluides aus dem Hohlraum (17) aufweist und wobei die Einrichtung zum Zuführen einer elektrischen Spannung eine zusätzliche Einrichtung zu den Einrichtungen (6) zum drehbaren Lagern des Zylinders ist.

2. Presseur nach Anspruch 1, bei dem das elektrisch leitfähige Fluid ein Öl oder Fett ist.

3. Presseur nach Anspruch 1 oder 2, bei dem das Mittel zum Verhindern (16.1, 16.2) des Ausströmens mindestens ein den Hohlraum (17) seitlich begrenzendes Begrenzungselement (16.1, 16.2) zwischen Stator (12) und Rotor (9) umfaßt.

4. Presseur nach Anspruch 3, bei dem das Mittel zum Verhindern (16.1, 16.2) des Ausströmens mindestens ein den Hohlraum seitlich begrenzendes Dichtelement zwischen Stator (12) und Rotor (9) umfaßt.

5. Presseur nach einem der Ansprüche 1 bis 4, bei dem das Mittel zum Verhindern des Ausströmens ein elektrisch leitfähiges Fluid umfaßt, das ein hochviskoses Öl oder Fett ist.

6. Presseur nach einem der Ansprüche 1 bis 5, bei dem der Rotor (9) (hohl) zylindrisch und/oder der Stator (12) (hohl-)zylindrisch ist/sind.

7. Presseur nach Anspruch 6, bei dem der Rotor (9) den Stator (12) umgibt oder umgekehrt.

8. Presseur nach Anspruch 6 oder 7, bei dem der Rotor (9) mindestens einen radial in den Hohlraum (17) hineinragenden, elektrisch leitfähigen Kreisring (28) trägt, dessen Umfang einen Abstand vom Stator (12) aufweist.

9. Presseur nach einem der Ansprüche 6 bis 8, bei dem der Stator (12) mindestens einen radial in den Hohlraum (17) hineinragenden, elektrisch leitfähigen Kreisring (28) trägt, dessen Umfang einen Abstand vom Rotor (9) aufweist.

10. Presseur nach Anspruch 8 oder 9, bei dem der Kreisring (28) eine Kreisringscheibe ist.

11. Presseur nach einem der Ansprüche 8 bis 10, bei dem zwischen dem Umfang des Kreisringes (28) und dem Stator (12) oder Rotor (9) ein schmaler Spalt vorhanden ist.

12. Presseur nach einem der Ansprüche 1 bis 11, bei dem der Rotor (9) kreis(ring-)scheibenförmig und/oder der Stator (12) kreis(ring-)scheibenförmig ist/sind.

13. Presseur nach einem der Ansprüche 1 bis 12, bei dem das Dichtelement (16) mindestens ein radial und/oder mindestens ein axial wirkender Dichtring ist.

14. Presseur nach einen der Ansprüche 1 bis 13, bei dem das Dichtelement (16) ein Simmerring ist.

15. Presseur nach einem der Ansprüche 1 bis 14, der zwei voneinander beabstandete Dichtelemente (16.1, 16.2) aufweist.

16. Presseur nach einem der Ansprüche 1 bis 15, bei dem zwischen Rotor (9) und Stator (12) mindestens ein den Rotor bezüglich des Stators drehbar lagerndes Drehlager (13) vorhanden ist.

17. Presseur nach Anspruch 16, bei dem das Drehlager (13) in dem Hohlraum (17) angeordnet ist.

18. Presseur nach einem der Ansprüche 1 bis 17, bei dem zwischen dem Drehlager (13) und dem Rotor (9) und/oder dem Stator (12) eine Isolatorschicht (14) vorhanden ist.

19. Presseur nach einem der Ansprüche 1 bis 18 mit mindestens einer Drehdurchführung für Luft und/oder Hydrauliköl, die einen Durchgangskanal für Luft und/oder Hydrauliköl hat, der einen drehbaren Teil und einen feststehenden Teil aufweist, die gegeneinander durch ein die Einrichtung zum Zuführen einer elektrischen Spannung bildendes, elektrisch leitfähiges Dichtsystem abgedichtet sind, dessen drehbarer Teil mit dem elektrisch leitfähigen Bereich verbunden ist und dessen feststehender Teil mit einer elektrischen Spannungsversorgung verbindbar ist.

20. Presseur nach Anspruch 19, bei dem das Dichtungssystem ein axial wirkendes Dichtungssystem ist.

21. Presseur nach Anspruch 20, bei dem ein feststehender Teil des Dichtungssystems einen federvorgespannten Gleitring und ein drehbarer Teil des Dichtungssystems einen damit zusammenwirkenden Gegen-Gleitring aufweist oder umgekehrt.

22. Presseur nach einem der Ansprüche 19 bis 21, bei dem der drehbare Teil des Durchgangskanals in mindestens einem Radiallager gelagert ist.

23. Presseur nach Anspruch 22, bei dem zwischen dem Radiallager und einem Gehäuse und/oder dem drehbaren Teil des Durchgangskanals eine Isolatorschicht vorhanden ist.

24. Presseur nach einem der Ansprüche 19 bis 23, bei dem der feststehende Teil des Durchgangskanals und der drehbare Teil des Durchgangskanals zylindrisch sind, wobei der drehbare Teil des Durchgangskanals in einem zylindrischen Hohlraum angeordnet ist und der feststehende Teil des Durchgangskanals in einer Zylinderbohrung des Gehäuses angeordnet ist.

25. Presseur nach einem der Ansprüche 1 bis 8, bei dem die Einrichtung zum Zuführen einer elektrischen Spannung (8) ein besonderes Bauteil oder eine besondere Baugruppe ist, das oder die keine Einrichtung zum drehbaren Lagern des Zylinders (6) und keine Drehdurchführung für Luft und/oder Hydrauliköl ist.

26. Presseur nach Anspruch 25, bei dem die Einrichtung zum Zuführen einer elektrischen Spannung einen Rotor (9.1) umfaßt, der eine an einer Stirnseite des Zylinders (2) angeordnete, elektrisch leitfähige Buchse aufweist, die elektrisch mit dem elektrisch leitfähigen Bereich (23, 4) des Zylinders verbunden ist, und einen Stator (12.1) umfaßt, der einen die Buchse umgebenden, elektrisch leitfähigen Hohlzylinder aufweist, der mit der Spannungsversorgung verbindbar ist.

27. Presseur nach Anspruch 26, bei dem der Rotor (9.1) an der dem Zylinder (2) zugewandten Stirnseite der Buchse einen radial vorspringenden, elektrisch leitfähigen Flansch (24) aufweist, der mit dem elektrisch leitfähigen Bereich (23, 4) des Zylinders (2) verbunden ist.

28. Presseur nach Anspruch 25, bei dem die Einrichtung zum Zuführen einer elektrischen Spannung (8.2) einen Rotor (9.2) umfaßt, der eine an einer Stirnseite des Zylinders (2) angeordnete, auf der Seite des Zylinders (2) geschlossene elektrisch leitfähige, hohle Buchse aufweist, und einen Stator (12.2), der eine in die Buchse hineinragende, elektrisch leitfähige Achse aufweist.

29. Presseur nach Anspruch 28, bei dem der Rotor (9.2) mittels eines von dem geschlossenen Ende der Buchse vorspringenden Gewindebolzens (32) in eine entsprechende Gewindebohrung (33) in der Stirnseite des Presseurs (1) eingeschraubt ist.

30. Presseur nach Anspruch 25, bei dem die Einrichtung zum Zuführen einer elektrischen Spannung (8.3) einen Rotor (9.3) umfaßt, der eine elektrisch leitfähige Adapterbuchse (40) aufweist, die einen zentralen Durchgangskanal (41) hat, der in den beiden Enden der Adapterbuchse (40) mündet, die an einem Ende ein Außengewinde (42) hat, das in eine Gewindebohrung in einer Stirnseite des Zylinders (2) oder in einer Welle (5) des Presseurs eingeschraubt ist, in der ein Kanal für Luft und/oder Hydrauliköl mündet, weist die Adapterbuchse (40) am anderen Ende eine in den Durchgangskanal (41) mündende Gewindebohrung (43) auf, in die ein Gewindebolzen einer Drehdurchführung für Luft und/oder Hydrauliköl einschraubbar ist und umfaßt der Stator (12.1) einen die Adapterbuchse (40) umgebenden, elektrisch leitfähigen Hohlzylinder, der mit einer elektrischen Spannungsversorgung verbindbar ist.

## Claims

1. An impression roller of a rotary printing press with a cylinder (2), which is more or less electrically conductive at least in one region (4), with devices (6) for supporting the cylinder so as to rotate about the cylinder axis (11) thereof, and with at least one device (8) for supplying an electrical voltage to the electrically conductive region (4), wherein the device for supplying an electrical voltage has at a face side of the cylinder (2) or at a shaft (5) connected thereto, a rotor (9) connected to the cylinder (2) or to the shaft and concentric to the cylinder axis (11), wherein the device for supplying an electrical voltage has a stator (12) disposed concentrically to the cylinder axis (11) at a distance from the rotor (9), and a cavity (17) between stator (12) and rotor (9), wherein the device for supplying an electrical voltage has a rotor electrode of the rotor (9) facing the cavity (17) and electrically connected to the electrically conductive region (4), wherein the device for supplying an electrical voltage has a stator electrode (19) of the stator (12) facing the cavity (17) and electrically connectable to the electrical voltage supply, **characterized in that** the device for supplying an electrical voltage (8) has an electrically conductive fluid in the cavity (17), wherein the device for supplying an electrical voltage has at least one means for preventing (16.1, 16.2) an outflow of the electrically conductive fluid from the cavity (17), and wherein the device for supplying an electrical voltage is a device in addition to the devices (6) for supporting the cylinder so as to be rotatable.

2. The impression roller according to claim 1, in which the electrically conductive fluid is an oil or grease.

3. The impression roller according to claim 1 or 2, in which the means for preventing (16.1, 16.2) the outflow comprises at least a boundary element (16.1, 16.2), delimiting the cavity (17) laterally between stator (12) and rotor (9).

4. The impression roller according to claim 3, in which the means for preventing (16.1, 16.2) the outflow comprises at least a sealing element, delimiting the cavity laterally between stator (12) and rotor (9).

5. The impression roller according to one of the claims 1 to 4, in which the means for preventing the outflow comprises an electrically conductive fluid that is high viscosity oil or grease.

6. The impression roller according to one of the claims 1 to 5, in which the rotor (9) is (hollow) cylindrical and/or the stator (12) is/are (hollow) cylindrical.

7. The impression roller according to claim 6, in which the rotor (9) encompasses the stator (12), or vice versa.

8. The impression roller according to claim 6 or 7, in which the rotor (9) supports at least one electrically conductive circular ring (28) projecting radially into the cavity (17), the perimeter thereof having a spacing from the stator (12).

9. The impression roller according to one of the claims 6 to 8, in which the stator (12) supports at least one electrically conductive circular ring (28) projecting radially into the cavity (17), the perimeter thereof having a spacing from the rotor (9).

10. The impression roller according to claim 8 or 9, in which the circular ring (28) is a circular ring disc.

11. The impression roller according to one of the claims 8 to 10, in which a narrow gap is present between the perimeter of the circular ring (28) and the stator (12) or rotor (9).

12. The impression roller according to one of the claims 1 to 11, in which the rotor (9) is circular (ring), disc-shaped and/or the stator (12) is/are circular (ring) disc-shaped.

13. The impression roller according to one of the claims 1 to 12, in which the sealing element (16) is at least a radially acting sealing ring and/or at least an axially acting sealing ring.

14. The impression roller according to one of the claims 1 to 13, in which the sealing element (16) is a shaft seal.

15. The impression roller according to one of the claims 1 to 14, which has two sealing elements (16.1, 16.2) spaced apart from each other.

16. The impression roller according to one of the claims 1 to 15, in which at least one pivot bearing (13) is present between the rotor (9) and the stator (12), supporting the rotor so as to rotate with respect to the stator.

17. The impression roller according to claim 16, in which the pivot bearing (13) is disposed in the cavity (17).

18. The impression roller according to one of the claims 1 to 17, in which an insulator layer (14) is present between the pivot bearing (13) and the rotor (9) and/or the stator (12).

19. The impression roller according to one of the claims 1 to 18, with at least one rotary feedthrough for air and/or hydraulic oil, that has a passage channel for air and/or hydraulic oil, and that has a rotatable part and a stationary part, which are sealed with respect to each other by an electrically conductive sealing system forming the device for supplying an electrical voltage, the rotatable part thereof being connected to the electrically conductive region, and the stationary part thereof being connectable to an electrical voltage supply.

20. The impression roller according to claim 19, in which the sealing system is an axially acting sealing system.

21. The impression roller according to claim 20, in which a stationary part of the sealing system has a spring pre-tensioned slide ring, and a rotatable part of the sealing system has a cooperating counter-slide ring, or vice versa.

22. The impression roller according to one of the claims 19 to 21, in which the rotatable part of the passage channel is supported in at least one radial bearing.

23. The impression roller according to claim 22, in which an insulator layer is present between the radial bearing and a housing and/or the rotatable part of the passage channel.

24. The impression roller according to one of the claims 19 to 23, in which the stationary part of the passage channel and the rotatable part of the passage channel are cylindrical, wherein the rotatable part of the passage channel is disposed in a cylindrical cavity, and the stationary part of the passage channel is disposed in a cylindrical bore of the housing.

25. The impression roller according to one of the claims 1 to 8, in which the device for supplying an electrical voltage (8) is a particular component or a particular assembly, that is not a device for supporting the cylinder (6) so as to rotate, and is not a rotary feedthrough for air and/or hydraulic oil.

26. The impression roller according to claim 25, in which the device for supplying an electrical voltage comprises a rotor (9.1) that has an electrically conductive bushing, which is electrically connected to the electrically conductive region (23, 4) of the cylinder, disposed at a face side of the cylinder (2), and comprises a stator (12.1) that has an electrically conductive hollow cylinder that encloses the bushing and that can be connected to the voltage supply.

27. The impression roller according to claim 26, in which the rotor (9.1) has at the face side of the bushing facing toward the cylinder (2), an electrically conductive flange (24), that is connected to the electrically conductive region (23, 4) of the cylinder (2), and that projects radially.

28. The impression roller according to claim 25, in which the device for supplying an electrical voltage (8.2) comprises a rotor (9.2) that has an electrically conductive hollow bushing that is closed on the side of the cylinder (2) and is disposed on a face side of the cylinder (2), and a stator (12.2) that has an electrically conductive axle projecting into the bushing.

29. The impression roller according to claim 28, in which the rotor (9.2), by means of a threaded bolt (32) projecting from the closed end of the bushing, is screwed into a correspondingly threaded bore (33) in the face side of the impression roller (1).

30. The impression roller according to claim 25, in which the device for supplying an electrical voltage (8.3) comprises a rotor (9.3) that has an electrically conductive adapter bushing (40) which has a central passage channel (41) that opens into both ends of the adapter bushing (40) that on one end has an external thread (42) that is screwed into a threaded bore in a face side of the cylinder (2) or into a shaft (5) of the impression roller, into which a channel for air and/or hydraulic oil opens, the other end of the adapter bushing (40) has threaded bore (43) opening into the passage channel (41) into which bore a threaded bolt of a rotatory feedthrough for air and/or hydraulic oil can be screwed, and the stator (12.1) comprising an electrically conductive hollow cylinder, encompassing the adapter bushing (40) and which can be connected to an electrical voltage supply.

## Revendications

1. Rouleau d'impression d'une presse rotative comprenant un cylindre (2) qui est plus ou moins électriquement conducteur dans une zone (4), comprenant des installations (6) pour le logement rotatif du cylindre autour de son axe de cylindre (11) et comprenant au moins une installation (8) pour délivrer une tension électrique à la zone électriquement conductrice (4), l'installation pour délivrer une tension électrique sur une face frontale du cylindre (2) ou d'un arbre (5) raccordé à celui-ci comporte un rotor (9) concentrique vers l'axe de cylindre (11) et raccordé au cylindre (2) ou à l'arbre, l'installation pour délivrer une tension électrique comporte un stator (12) agencé concentriquement par rapport à l'axe de cylindre (11) à distance du rotor (9) et une cavité (17) entre le stator (12) et le rotor (9), l'installation pour délivrer une tension électrique comportant une électrode rotorique du rotor (9) dirigée vers la cavité (17) et raccordée électriquement à la zone électriquement conductrice (4), l'installation pour délivrer une tension électrique comporte une électrode statorique (19) du stator (12) dirigée vers la cavité (17) et raccordable électriquement à la tension électrique, **caractérisé en ce que** l'installation pour délivrer une tension électrique (8) comprend un fluide électriquement conducteur dans la cavité (17), l'installation pour délivrer une tension électrique comportant au moins un moyen pour éviter (16.1, 16.2) un échappement du fluide électriquement conducteur hors de la cavité (17) et l'installation pour délivrer une tension électrique etant une installation supplémentaire annexe aux installations (6) de logement rotatif du cylindre.

2. Rouleau d'impression selon la revendication 1, dans lequel le fluide électriquement conducteur est une huile ou une graisse.

3. Rouleau d'impression selon les revendications 1 ou 2, dans lequel le moyen pour éviter (16.1, 16.2) l'échappement comprend au moins un élément de limitation (16.1, 16.2) délimitant latéralement la cavité (17) entre le stator (12) et le rotor (9).

4. Rouleau d'impression selon la revendication 3, dans lequel le moyen pour éviter (16.1, 16.2) l'échappement comprend au moins un élément d'étanchéité délimitant latéralement la cavité entre le stator (12) et le rotor (9).

5. Rouleau d'impression selon une des revendications 1 à 4, dans lequel le moyen pour éviter l'échappement comprend un fluide électriquement conducteur qui est une huile très visqueuse ou une graisse.

6. Rouleau d'impression selon une des revendications 1 à 5, dans lequel le rotor (9) est cylindrique (creux) et/ou le stator (12) est/sont cylindrique/s (creux).

7. Rouleau d'impression selon la revendication 6, dans lequel le rotor (9) entoure le stator (12) ou inversement.

8. Rouleau d'impression selon les revendications 6 ou 7, dans lequel le rotor (9) supporte au moins une couronne (28) électriquement conductrice faisant saillie radialement dans la cavité (17) et dont la circonférence présente une distance avec le stator (12).

9. Rouleau d'impression selon une des revendications 6 à 8, dans lequel le stator (12) supporte au moins une couronne (28) électriquement conductrice faisant saillie radialement dans la cavité (17) et dont la circonférence présente une distance avec le rotor (9).

10. Rouleau d'impression selon les revendications 8 ou 9, dans lequel la couronne (28) est un disque de couronne.

11. Rouleau d'impression selon une des revendications 8 à 10, dans lequel une fente étroite est présente entre la circonférence de la couronne (28) et le stator (12) ou le rotor (9).

12. Rouleau d'impression selon une des revendications 1 à 11, dans lequel le rotor (9) est en forme de disque (de couronne) et/ou le stator (12) est/sont en forme de disque (de couronne).

13. Rouleau d'impression selon une des revendications 1 à 12, dans lequel l'élément d'étanchéité (16) est au moins une bague d'étanchéité à action radiale et/ou au moins à action axiale.

14. Rouleau d'impression selon une des revendications 1 à 13, dans lequel l'élément d'étanchéité (16) est une bague d'étanchéité système S.P.I.

15. Rouleau d'impression selon une des revendications 1 à 14, qui comprend deux éléments d'étanchéité (16.1, 16.2) séparés l'un de l'autre.

16. Rouleau d'impression selon une des revendications 1 à 15, dans lequel un coussinet de pivotement (13) logeant de façon rotative le rotor par rapport au stator est présent entre le rotor (9) et le stator (12).

17. Rouleau d'impression selon la revendication 16, dans lequel le coussinet de pivotement (13) est agencé dans la cavité (17).

18. Rouleau d'impression selon une des revendications 1 à 17, dans lequel une couche d'isolateur (14) est présente entre le coussinet de pivotement (13) et le rotor (9) et/ou le stator (12).

19. Rouleau d'impression selon une des revendications 1 à 18 comprenant au moins un passage tournant pour l'air et/ou l'huile hydraulique ayant un canal de passage pour l'air et/ou l'huile hydraulique, qui présente une partie rotative et une partie fixe, qui sont étanches l'une par rapport à l'autre grâce à un système d'étanchéité électriquement conducteur formant l'installation pour délivrer une tension électrique, dont la partie rotative est raccordée à la zone électriquement conductrice et dont la partie fixe peut être raccordée à une alimentation électrique.

20. Rouleau d'impression selon la revendication 19, dans lequel le système de garniture est un système de garniture à action axiale.

21. Rouleau d'impression selon la revendication 20, dans lequel une partie fixe du système de garniture présente un anneau glissant précontraint élastiquement, et une partie rotative du système de garniture présente un anneau glissant antagoniste concourant ou inversement.

22. Rouleau d'impression selon une des revendications 19 à 21, dans lequel la partie rotative du canal de passage est logée dans au moins un palier radial.

23. Rouleau d'impression selon la revendication 22, dans lequel une couche d'isolateur est présente entre le palier radial et un boîtier et/ou la partie rotative du canal de passage.

24. Rouleau d'impression selon une des revendications 19 à 23, dans lequel la partie fixe du canal de passage et la partie rotative du canal de passage sont cylindriques, la partie rotative du canal de passage étant agencée dans une cavité cylindrique et la partie fixe du canal de passage étant agencée dans un alésage du cylindre du boîtier.

25. Rouleau d'impression selon une des revendications 1 à 8, dans lequel l'installation pour délivrer une tension électrique (8) est un composant spécial ou un sous-groupe spécial qui n'est pas une installation pour le logement rotatif du cylindre (6) ni un passage tournant pour l'air et/ou l'huile hydraulique.

26. Rouleau d'impression selon la revendication 25, dans lequel l'installation pour délivrer une tension électrique comprend un rotor (9.1) qui présente une douille électriquement conductrice agencée sur une face frontale du cylindre (2), laquelle douille est raccordée électriquement à la zone électriquement conductrice (23, 4) du cylindre, et comprend un stator (12.1) qui présente un cylindre creux électriquement conducteur entourant la douille, lequel cylindre creux peut être raccordé à l'alimentation électrique.

27. Rouleau d'impression selon la revendication 26, dans lequel le rotor (9.1) présente sur la face frontale dirigée vers le cylindre (2) de la douille une bride (24) électriquement conductrice faisant saillie radialement qui est raccordée à la zone électriquement conductrice (23, 4) du cylindre (2).

28. Rouleau d'impression selon la revendication 25, dans lequel l'installation pour délivrer une tension électrique (8.2) comprend un rotor (9.2) qui présente une douille creuse électriquement conductrice fermée sur la face du cylindre (2) et agencée sur une face frontale du cylindre (2), et un stator (12.2) qui présente un axe électriquement conducteur dépassant dans la douille.

29. Rouleau d'impression selon la revendication 28, dans lequel le rotor (9.2) est vissé au moyen d'un boulon fileté (32) dépassant de l'extrémité fermée de la douille dans un trou fileté correspondant (33) dans la face frontale du rouleau d'impression (1).

30. Rouleau d'impression selon la revendication 25, dans lequel l'installation pour délivrer une tension électrique (8.3) comprend un rotor (9.3) qui présente une douille de raccord (40) électriquement conductrice ayant un canal de passage central (41) qui débouche aux deux extrémités de la douille de raccord (40), ayant un filet extérieur (42) à une extrémité, lequel filet extérieur est vissé dans un trou fileté dans une face frontale du cylindre (2) ou dans un arbre (5) du rouleau d'impression, dans lequel débouche un canal pour l'air et/ou l'huile hydraulique, la douille de raccord (40) comporte à l'autre extrémité un trou fileté (43) débouchant dans le canal de passage (41) dans lequel peut être vissé un boulon fileté d'un passage tournant pour l'air et/ou l'huile hydraulique et le stator (12.1) comprend un cylindre creux électriquement conducteur entourant la douille de raccord (40), lequel peut être raccordé à une alimentation électrique.
